# EUROPÄISCHE PATENTSCHRIFT

(11) **EP 2 143 147 B1**
(45) Veröffentlichungstag und Bekanntmachung des Hinweises auf die Patenterteilung: **28.09.2011**
(21) Anmeldenummer: 07816290.6
(22) Anmeldetag: 03.12.2007
(51) Int. Cl.: H01L 31/048

(54) **ANSCHLUSSDOSEN**
RECEPTACLES
BOÎTES DE CONNEXIONS

(30) Priorität: 13.04.2007 CH 6132007
(43) Veröffentlichungstag der Anmeldung: 13.01.2010
(73) Patentinhaber: Huber+Suhner AG, 9100 Herisau (CH)
(72) Erfinder: GRIMBERG, Thomas, CH-8404 Winterthur (CH); WATRINET, Hanns, CH-8733 Eschenbach (CH); GÖLDI, Max, CH-8330 Pfäffikon (CH); LEU, Sylvère, CH-8824 Schönenberg (CH)
(74) Vertreter: Rentsch Partner AG
(86) Internationale Anmeldenummer: PCT/CH2007/000607
(87) Internationale Veröffentlichungsnummer: WO 2008/124951

(56) Entgegenhaltungen:
- EP-A- 0 793 278
- EP-B- 0 999 601
- WO-A-93/12636
- WO-A-2006/074561
- DE-B3- 10 334 935
- DE-U1-202005 007 592
- JP-A- 2005 033 229
- JP-A- 2006 073 990

## Beschreibung

Die vorliegende Erfindung liegt auf dem Gebiet der Verbindungstechnik und betrifft eine Anschlussdose zum Anschliessen einer Verkabelung an ein Gerät, insbesondere zum Anschliessen einer Verkabelung an ein photovoltaisches Modul (photovoltaischer Kollektor, Solarpaneel, Solarzelle).

Photovoltaische Solaranlagen weisen in der Regel einen modulare Aufbau auf und bestehen aus einer Vielzahl von Solarzellen, welche über eine externe Verkabelung angeschlossen werden. Um eine höhere Spannung zu erzielen werden die einzelnen Solarzellen zumindest gruppenweise in Serie geschaltet, indem der Pluspol einer ersten Solarzelle mit dem Minuspol einer weiteren Solarzelle verbunden wird. Ein Problem besteht dabei darin, dass bei einer partiellen Abdeckung einer Solarzelle, z.B. infolge von Schattenwurf von umstehenden Objekten oder durch Wolken, diese passiv wird und nur wenig oder gar nicht zur Stromproduktion beiträgt. Dies hat zur Folge, dass die abgedeckte Solarzelle bei einer Serieschaltung vom Strom der benachbarten Solarzelle durchflossen wird und dadurch Schaden nehmen oder zumindest eine Verringerung der Lebensdauer erfahren kann. Aus diesem Grund ist bekannt, dass Solarzellen mittels einer elektronischen Schaltung, die in der Regel Dioden als Schutzelemente aufweist, temporär überbrückt und damit während der Störung von der Stromproduktion abgekoppelt werden. Diese elektronischen Schaltungen werden häufig in Anschlussdosen untergebracht, die gleichzeitig zum Anschliessen der Verkabelung dienen.

EP999601 von Sumitomo Wiring Systems Ltd. zeigt eine Anschlussdose für Solarzellen mit einem Gehäuse mit einer unteren und einer oberen Abdeckung, die über Steckverbindungen miteinander verbindbar sind. Die obere Abdeckung verfügt über Anschlüsse für eine externe elektrische Verkabelung, sowie elektrische Steckkontakte die so angeordnet sind, dass sie bei geschlossener Stellung des Gehäuses mit korrespondierenden elektrischen Kontakten der unteren Abdeckung eine elektrische Verbindung ergeben. In der oberen Abdeckung sind Dioden angeordnet, die zum Schutz der Solarzelle dienen. Um die Anordnung wetterfest zu machen sind die Dioden in ein Füllermaterial, z.B. Silikon, eingegossen. Ein besonderer Nachteil dieser Anordnung besteht darin, dass sie nicht für heutige Hochleistungssolarzellen geeignet sind, da sie eine nur ungenügende Kühlung aufweisen. Ein weiterer Nachteil besteht darin, dass das vorgeschlagene Eingiessen in Silikon den Materialverbrauch und das Gewicht unnötig erhöht, sowie zeitintensiv ist.

US6582249 von Tyco Electronics AMP GmbH zeigt eine Anschlussdose für Solarmodule mit einem Gehäuse aus Kunststoff und einem mit einem Gelenkband verbunden Deckel. Das Gehäuseunterteil weist eine Öffnung für Anschlüsse eines Solarpaneels und Anschlüsse für eine externe elektrische Verkabelung auf. Im Gehäuseunterteil sind zwischen den Anschlüssen elektrische Bauteile, z.B. Dioden angebracht. Die elektrischen Bauteile können durch eine an der seitlichen Innenwand des Gehäuses schwenkbar angebrachte Schutzabdeckung gegen Berührung geschützt werden. Vorzugsweise werden die Bauteile durch eine Öffnung in der Schutzabdeckung mit einem Füllermaterial vergossen nachdem die Schutzabdeckung im Gehäuse in bestimmungsgemässer Lage fixiert wurde.

EP1605554 von Mantenimiento Instalaciones Malaga SL zeigt eine Anschlussdose für Solarzellen mit einem Gehäuseunterteil und einem Deckel mit lösbarer Steckverbindung. Das Gehäuse weist eine erste Öffnung für Anschlüsse einer Solarzelle und eine zweite Öffnung für Anschlüsse einer externen elektrischen Verkabelung auf. Im Gehäuse kann mittels einer Schraube eine Leiterplatte befestigt werden.

Das deutsche Gebrauchsmuster DE202005018884U1 von Multi-Holding AG zeigt eine Anschlussdose für ein Solarpaneel. Die Anschlussdose weist ein Gehäuseunterteil und einen Deckel auf, der mit dem Gehäuseunterteil schwenkbar verbunden ist. Das Gehäuseunterteil weist Öffnungen für Anschlüsse eines Solarpaneels und eine externe elektrische Verkabelung auf Im Innern des Gehäuses sind Kontaktelemente für die Befestigung elektrischer Bauteile, insbesondere Dioden vorgesehen. Die Kontaktelemente sind derart ausgebildet, dass sie die durch die Dioden entstehende Wärme aufnehmen und ableiten sollen.

EP1501133 von Tyco Electronic AMP GmbH zeigt eine Anschlussdose für ein Solarpaneel. Die Anschlussdose weist ein Gehäuseunterteil und einen mit dem Gehäuseunterteil über ein Scharnier schwenkbar verbundenen Deckel auf. Das Gehäuseunterteil weist im Bereich des Bodens eine Öffnung für Anschlüsse eines Solarpaneels und in einer Seitenwand Öffnungen für eine externe elektrische Verkabelung auf. Im Innern des Gehäuses sind Stromschienen und Kontaktelemente angeordnet. Eine Ausführungsform weist eine Leiterplatte mit Dioden auf, welche durch Halteelemente des Gehäuses festgehalten wird.

JP20022359389 von Kitani Denki KK zeigt eine Anschlussdose für Solarzellen mit einem Gehäuse mit einem Gehäuseunterteil und einem abnehmbaren Deckel. Öffnungen im Bereich des Bodens des Gehäuseunterteils dienen zum Anschluss an ein Solarpaneel. Öffnungen in einer Seitenwand dienen zum Anschluss einer elektrischen Verkabelung. Austauschbar angeordnete Dioden dienen als Schutzelemente.

DE102005044939 von Spelsberg Guenther GmbH Co KG offenbart eine Anschlussdose für Solarzellen. Die Anschlussdose weist eine Schutzeinrichtung z.B. in Form einer Bypassdiode auf. Die Leiterplatte ist mit einem Kühlelement verbunden, welches zur Ableitung von Wärme aus dem Gehäuse herausgeführt und mit dem Rahmen des Solarpaneels verbunden ist.

JP2005033229 von der Mitsubishi Electronic Corporation beschreibt eine Anschlussdose für ein Solarzellenmodul. Bis auf einen T-förmigen Lüftungskanal wird die Anschlussdose mit ihrer Rückseite vollflächig auf die Rückseite eines Solarzellenmoduls geklebt. Die Anschlüsse der Solarzelle werden mit den Anschlüssen der Anschlussdose im Innem der Anschlussdose verbunden. Anschliessend wird das Innere der Anschlussdose mit einem Vergussmaterial Vergossen Die Dose weist den Nachteil auf, dass sie schwierig zu montieren ist und eine ungenügende Kühlung für die im Innern angeordnete Elektronik bewirkt.

EP0793278 von Sanyo Electric Co. beschreibt einen Inverter zum Wechselrichten des Stromes eines Solarzellenmoduls. Die Aufgabe besteht darin den Wechselrichter so anzuordnen, dass die thermische Belastung des Wechselrichters reduziert wird in dem dieser nicht durch das Solarzellenmodul aufgeheizt wird. Diese Aufgabe wird gelöst indem das Gehäuse des Wechselrichters in einem gewissen Abstand zur Rückwand des Solarzellenmoduls montiert wird, sowie spezifische Verbinder zum Anschliessen verwendet Werden. Ein Problem besteht darin, dass die Montage des Wechselrichters kompliziert und damit unwirtschaftlich ist

Ein Nachteil der aus dem Stand der Technik bekannten Anschlussdosen liegt in der nur ungenügenden Kühlung der elektronischen Bauteile bzw. in der dadurch resultierenden thermischen Belastung der Solarzellen.

Eine Aufgabe der Erfindung besteht darin, eine Anschlussdose zu zeigen, welche die dem Stand der Technik anhaftenden Nachteile nicht aufweist

Diese Aufgabe wird durch die in den Patentansprüchen definierte Erfindung gelöst.

Eine erfindungsgemässe Anschlussdose weist in der Regel ein ein- oder mehrteiliges Gehäuse auf, das eine Leiterplatte mit elektrischen/elektronischen Bauelementen umschliesst. Je nach Ausführungsform ist das Gehäuse mehrteilig ausgestaltet und weist ein Gehäuseunterteil und ein Gehäuseoberteil auf. Alternativ kann das Gehäuse durch Umspritzen der Innenteile gebildet werden.

Die Anschlussdose ist in der Regel so ausgestaltet, dass sie mittels eines Montagesockels auf einer Grundfläche, beispielsweise der Rückseite eines Solarpaneels montiert werden kann. Der Montagesockel kann dabei als separates Teil ausgebildet sein mit dem ein Gehäuseteil wirkverbunden wird. Um eine bessere Kräfteverteilung zu erzielen und/oder um eine konvektive Kühlung zu beeinflussen kann der Montagesockel segmentiert ausgestaltet sein.

In der Regel werden die Kontaktfahnen bzw. die Kontaktdrähte z.B. einer Solarzelle in einen Anschlussschacht der Anschlussdose geführt und dort über hierfür vorgesehenen Anschlüsse mit der Leiterplatte wirkverbunden. Dieser Anschlussschacht kann je nach Ausführungsform am Rande der Anschlussdose peripher angeformt oder aber innerhalb der Anschlussdose platziert sein. Der Anschlussschacht ist in der Regel sowohl oben als auch unten offen.

In einer Ausführungsform sind externe Anschlusskabel in das Gehäuse der Anschlussdose geführt und dort mit der Leiterplatte (Platine oder Stanzgitter) wirkverbunden. Die Anschlusskabel weisen bei Bedarf normierte Steckverbindungen auf, mittels denen ein einfaches Anschliessen extern möglich ist. Am Gehäuse der Anschlussdose können Halterungen für die Steckverbindungen, bzw. die Kabel vorgesehen sein, in welchen die Steckverbindungen für den Transport und ein automatisches Austesten, z.B. während der Montage, in einer definierten Position eingehängt werden können.

Der Anschlussschacht kann bei Bedarf mit einem Deckel verschlossen werden. Der Deckel kann so ausgestaltet sein, dass er ein Auslaufen einer eingefüllten aber noch nicht ausgehärteten Vergussmasse aktiv verhindert. Dadurch besteht die Möglichkeit z.B. ein fertig konfektioniertes Solarpanel unmittelbar nach dem Vergiessen des Anschlussschachtes lageunabhängige zu positionieren ohne dass die Vergussmasse wieder heraus fliesst. Dies verkürzt die Standzeit bei der Montage. Der Deckel ist mit Vorteil als Verdränger ausgebildet, so dass die für ein Ausgiessen notwendige Menge an Vergussmasse reduziert wird. Um den Füllstand zu kontrollieren kann der Deckel zudem aus einem transparenten Material hergestellt sein.

Bei Bedarf weist der Deckel eine oder mehrere Öffnungen zum Einfüllen einer Vergussmasse, resp. zum Entlüften auf. In einer Ausführungsform weist der Deckel zwei Öffnungen auf, wobei eine der beiden zum Befüllen und die andere zum Entlüften dient. Indem diese z.B. diagonal zueinander und randnah zum Angussschacht angeordnet sind, liegt immer eine der Öffnungen tiefer zur anderen, was ein Befüllen erleichtert. Somit kann an der tiefer liegenden Öffnung befüllt werden, so dass die eingeschlossene Luft an der höher liegenden Öffnung aus dem Anschlussschacht entweichen kann. Eine andere Ausführungsform weist eine zentrale Öffnung zum Befüllen und randseitig eine oder mehrere Entlüftungslöcher auf. Andere Anordnungen sind möglich. Bei Bedarf weisen die Einfüllöffnungen so genannte Stutzen auf, welche ein Anschliessen einer Füllvorrichtung ermöglichen.

Der Deckel des Anschlussschachtes kann zum Beispiel durch Einschnappen, Schrauben, Kleben oder Ultraschallschweissen oder einer Kombination davon verschlossen werden. Falls der Anschlussschacht vergossen werden soll, ist der Deckel vorzugsweise so ausgestaltet, dass die erforderliche Vergussmasse minimiert wird. Hierzu weist der Deckel z.B. auf seiner Innenseite einen Verdränger auf, welcher in den Anschlussschacht hinein ragt. Alternativ kann vor dem Verschliessen mit dem Deckel auch ein separates Teil, ein Verdränger, in den Anschlussschacht eingebracht werden, ohne dass dieser Verdränger in den Deckel integriert oder mit diesem verbunden ist In einer Ausführungsform drückt der Deckel in vorgesehener Weise gegen die Anschlüsse bzw. gegen die Kontaktfahnen/Kontaktdrähte und verbessert dadurch den elektrischen Kontakt zwischen Kontaktfahnen/Kontaktdrähten und Anschlüssen. Die beschriebene Art von Deckel kann auch zum Verschliessen von Anschlussschächten von anderen Anschlussdosen gebraucht werden und ist daher nicht auf die Verwendung mit den hier offenbarten Variante beschränkt.

Eine Ausführungsform der Anschlussdose ist so ausgestaltet, dass die Rückseite der Anschlussdose nicht flach auf einer Solarzelle aufliegt, sondern mittels dem Montagesockel in einem gewissen Abstand zu dieser gehalten wird. Ein solches Abheben von der Grundfläche hat den Vorteil, dass die thermische Belastung zwischen den elektronischen Bauteilen der Anschlussdose und dem Solarpanel reduziert wird. Die Anschlussdose kann zudem Luftleitbleche/Kühlrippen aufweisen, welche die Luftzirkulation auf der Rückseite der Dose beeinflussen und damit die Kühlung verbessern, respektive Wärmestaus vermindert. Die Luftleitbleche können aus dem selben Material hergestellt sein wie das Gehäuse der Anschlussdose. Um die mechanische Stabilität zu erhöhen und/oder um die Luftzirkulation positiv zu beeinflussen, können die Luftleitbleche gekrümmt ausgestaltet sein und/oder in montiertem Zustand zur Abstützung auf einem Solarpanel dienen. Der Anschlussschacht kann selbst als Montagesockel ausgestaltet sein. Falls erforderlich können weitere Abstützungen vorgesehen werden. Der Abstand zwischen Grundfläche und Rückwand der Anschlussdose beträgt in der Regel 2-30 mm. Je nach Ausführungsform sind andere Abstände möglich.

In einer Ausführungsform ist der Montagesockel segmentiert ausgestaltet, so dass er nur auf zwei sich gegenüberliegenden Seiten der Anschlussdose von dieser absteht, was die freie Luftzirkulation begünstigt. Füsse welche Teile des Montagesockels sind sowie der untere Rand des Anschlussschachtes werden mit der Oberfläche eines Solarpanels vorzugsweise durch Verkleben wirkverbunden. Durch Stege am Gehäuseunterteil können Luftkanäle gebildet werden welche die konvektive Kühlung unterstützen. Die Luftleitbleche dienen dazu um die Luftströmung um den Anschlussschacht herum zu leiten, was die Gefahr eines Wärmestaus reduziert. Je nach Positionierung des Solarpaneels und Positionierung der Anschlussdose am Solarpaneel kommen solchen Anschlussdosen zur Anwendung, welche die Stege in etwa parallel zur X- oder zur Y-Achse ausgerichtet haben, so dass die Luftströmung immer von unten nach oben geleitet wird. Alternativ können die Stege auch in jeder anderen Richtung verlaufen.

Als Leiterplatte für die Verbindung der elektrischen/elektronischen Bauelemente, können ein- oder mehrschichtige Lösungen vorgesehen werden. Neben geätzten Leiterplatten mit einer auf einem elektrisch isolierenden Trägermaterial aufgebrachten Kupferschicht, besteht die Möglichkeit ein durch Stanzen aus einem Blech hergestelltes Gitter zu verwenden (Stanzgitter). In einer entsprechenden Ausführungsform weist das Gehäuse entsprechend ausgestaltete Haltemittel, z.B. in Form von Schnapp- oder Klemmverbindungen, zur Aufnahme des Stanzgitters auf. Stanzgitter weisen zudem den Vorteil auf, dass sie zusammen mit den darauf angeordneten elektronischen Bauelementen einfach in einer Spritzgiessform umspritzt werden können. Dadurch kann erreicht werden, dass das Innenleben hermetisch abgeschlossen ist. Ein weiterer Vorteil besteht darin, dass entstehende Wärme durch am Gehäuse anliegende Stanzgitter oder Leiterplatten effizient nach aussen abgeleitet wird.

Die Blechstärke eines Stanzgitters beträgt je nach Ausführungsform 0.4 mm. Durch die massive Ausführung dient die Platine auch als Kühlblech für die elektrischen/elektronischen Bauelemente. Als Material kommen elektrisch und thermisch ausreichend leitende Materialien zum Einsatz. Neben Kupfer, Stahl- oder Aluminiumlegierungen können unter anderem auch z.B. CuSn0.15, CuFe2P oder Cu-ETP zum Einsatz kommen.

Die Gehäuseteile der Anschlussdose sind in der Regel so ausgestaltet, dass die Platine an diesen eng anliegt, um die Wärme der elektrischen/elektronischen Bauelemente über die Leiterplatten und das Gehäuse nach aussen abzuleiten. Da in einer Ausführungsform zumindest auf einer Seite der Platine die elektrischen/elektronischen Bauteile, beispielsweise Dioden, sowie die externen Kabel angeschlossen werden müssen, sind im Gehäuse jeweils entsprechende Aussparungen vorgesehen. Ein Vorteil eines Stanzgitter besteht darin, dass die entstehende Wärme sowohl unten als auch oben gut über ein eng anliegendes Gehäuse abgeleitet werden kann. Um die Temperaturleitfähigkeit zwischen Platine und Gehäuse weiter zu optimieren, können die genannten Aussparungen sowie weitere eventuell vorhandene Lufträume vor dem Verschliessen des Gehäuses mit einer thermisch leitenden und elektrisch isolierenden Masse (z.B. Wärmleitpaste) ausgefüllt werden.

Die Gehäuseteile werden vorzugsweise durch Spritzgiessen oder Druckguss hergestellt, es sind aber auch andere Herstellmethoden denkbar. In der Regel wird hierzu ein ausreichend temperaturbeständiges Material, beispielsweise Polyamid (PA), Polyphenylether (PPO, PPE), Polycarbonat (PC), Polybutylenterephthalat (PBT) oder Polyethylenterephthalat (PET) verwendet. Diese Werkstoffe können mit Fasern, z.B. 10% bis 60% Glasfasern, gefüllt sein. Andere Materialien sind je nach Ausführungsform möglich.

Damit die Elektronik in der Anschlussdose vor Feuchtigkeit und anderen Umwelteinflüssen geschützt ist, können die Gehäuseteile mit einer umlaufenden Dichtung gegen aussen abgedichtet sein. Die Dichtung kann als separates Teil ausgestaltet oder mittels Mehrkomponenten-Spritzguss am Gehäuse angeformt sein. Denkbar ist auch eine einfache umlaufende Nut in einem Gehäuseteil und eine entsprechend vorstehende umlaufende Rippe im anderen Gehäuseteil, welche in Schliessstellung miteinander korrespondieren. Die Nut kann alternativ oder ergänzend vor dem Schliessen mit einer Dichtmasse, z.B. Silikon, ausgefüllt werden. In einer weiteren Ausgestaltung kann diese Nut bewusst grösser ausgebildet sein, so dass die Dichtmasse nachträglich, bei geschlossenem Gehäuse, in den entstehenden Hohlraum eingefüllt werden kann. Entsprechende Öffnungen und Anschlussstutzen sind vorgesehen.

Im Fall, dass eine Anschlussdose mit langsam aushärtendem Kleber befestigt werden soll, kann die für die Verarbeitung erforderliche Zeit durch die Verwendung eines ergänzenden Haltemittels überbrückt werden. Gute Resultate werden mittels doppelseitigem Klebband erzielt. Je nach Anwendungsgebiet besteht die Möglichkeit die Anschlussdose auch ausschliesslich mit doppelseitigem Klebband zu befestigen. Doppelseitiges Klebeband ermöglicht eine sofortige Fixierung der Anschlussdose auf einer Grundfläche, was sowohl die Verarbeitungszeit als auch eine automatisierte Verarbeitung positiv beeinflussen kann. Weitere Dichtmittel zwischen der Anschlussdose und einer Grundfläche können vorgesehen werden.

Eine Ausgestaltung einer Anschlussdose mit einem Gehäuse und einem Anschlussschacht, der zum Anschliessen von mindestens einem im Innern des Gehäuses auf einer Leiterplatte angeordneten elektronischen Bauelement an elektrische Anschlüsse eines Solarpanels dient, wobei das Gehäuse einen vorstehenden Montagesockel aufweist, der zur Befestigung der Anschlussdose an einer Oberfläche des Solarpanels dient ist so ausgestaltet, dass die Rückwand des Gehäuses in montiertem Zustand einen Abstand zum Solarpanel aufweist, derart, dass eine konvektive Kühlung des Gehäuses resultiert. Dabei kann der Anschlussschacht peripher am Gehäuse der Anschlussdose angebracht sein. In einer weiteren Ausführungsform ist der Montagesockel mehrteilig ausgebildet und kann den Anschlussschacht umgeben. Eine spezielle Ausführungsform weist mindestens eine Klebefläche zur Aufnahme eines Klebstoffes und/oder eines doppelseitigen Klebbandes am Montagesockel auf. Eine weitere Ausführungsform einer Anschlussdose weist auf der Gehäuserückseite angeordnete Luftleitbleche auf. Diese Luftleitbleche können derart ausgestaltet sein, dass sie in montiertem Zustand zum Abstützen des Gehäuses gegenüber einem Solarpanel dienen. Auch möglich ist, dass das Gehäuse zumindest bereichsweise an der Leiterplatte eng anliegt, sodass entstehende Wärme durch das Gehäuse nach aussen transportiert wird. Die Leiterplatte kann dabei als klassische Leiterplatte, als Stanzgitter oder aber als blosse Verdrahtung ausgeführt sein. In einer weiteren Variante der Anschlussdose umgibt das Gehäuse bestehend aus einem Gehäuseunterteil und einem Gehäuseoberteil die Leiterplatte und das mindestens eine elektronische Bauelement dicht. Insbesondere kann das Gehäuse einteilig durch Umspritzen der Leiterplatte und dem mindestens einen elektronischen Bauelement gebildet sein. In einer bevorzugten Ausführungsform ist der Anschlussschacht zur Aufnahme eines Vergussmittels geeignet.

Ausführungsformen der Erfindung werden anhand der nachfolgenden Figuren näher erläutert. Es zeigen:
- Fig. 1: eine Anschlussdose in einer perspektivischen Darstellung von schräg vorne und oben;
- Fig. 2: die Anschlussdose gemäss Figur 1 in einer perspektivischen Darstellung von schräg vorne und unten;
- Fig. 3: die Anschlussdose gemäss Figur 1 in einer Ansicht von unten;
- Fig. 4: eine Schnittdarstellung entlang der Linie DD gemäss Figur 3;
- Fig. 5: die Anschlussdose gemäss Figur 1 in einer Draufsicht, und
- Fig. 6: die Anschlussdose mit entferntem Gehäuseoberteil gemäss Figur 1 in einer per- spektivischen Darstellung von schräg vorne und oben.

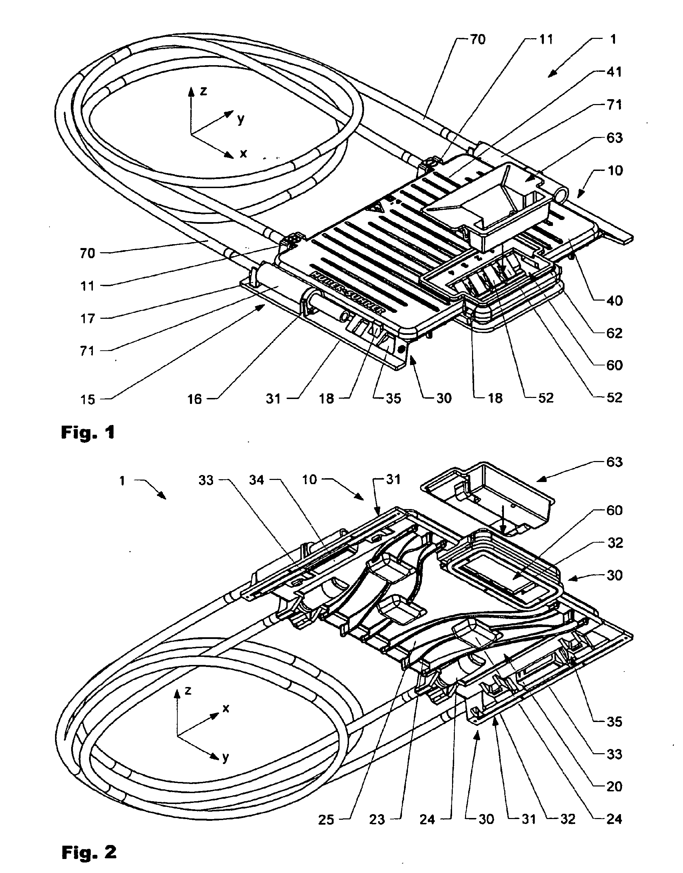

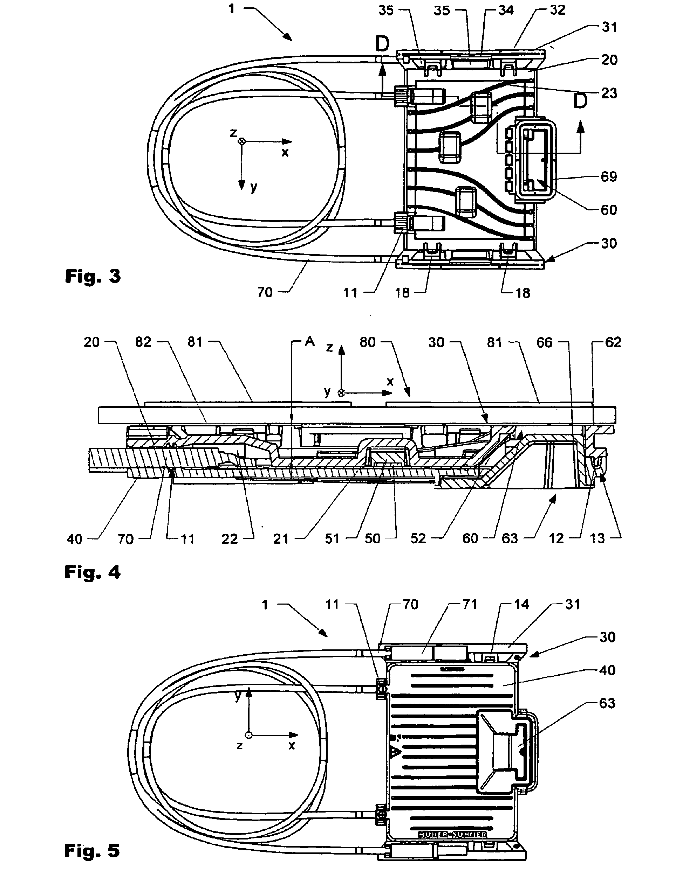

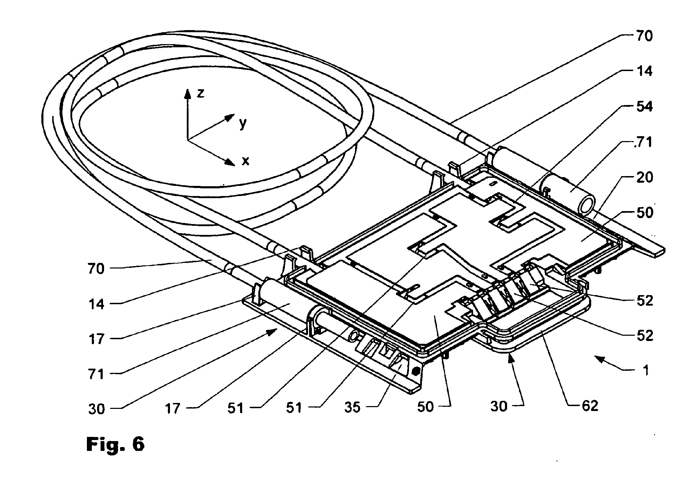

Figur 1 zeigt eine Anschlussdose 1 in einer perspektivischen Darstellung von schräg vorne und oben und Figur 2 die selbe Anschlussdose 1 von schräg vorne und unten. Figur 3 zeigt die Anschlussdose 1 von unten, Figur 4 in einer Schnittdarstellung (Schnittlinie DD gemäss Figur 3) von der Seite, Figur 5 von oben und Figur 6 von in geöffnetem Zustand von schräg oben.

Zu erkennen sind ein Gehäuse 10, bestehend aus einem Gehäuseoberteil 40 und einem Gehäuseunterteil 20. Die beiden Gehäuseteile 20, 40 werden hier unter anderem mittels Schnapphacken 18 miteinander verbunden, können aber alternativ oder in Ergänzung z.B. bei Bedarf miteinander verklebt werden. Seitlich vom Gehäuse 10 stehen Füsse 31 ab, die Teil eines hier segmentierten und nach unten vorstehenden Montagesockels 30 sind. Der Montagesockel 30 dient zur eigentlichen Befestigung des Gehäuses 10 an einer Oberfläche eines Solarpanels (beide nicht näher dargestellt). Der Montagesockel 30 ist in der gezeigten Ausführungsform ein integraler Bestandteil vom Gehäuse 10 kann aber auch als separates Teil ausgebildet sein. Der Montagesockel 30 bestimmt den für eine konvektive Kühlung auf der Gehäuseunterseite erforderlichen Abstand A (vgl. Figur 4) zwischen der Gehäuserückwand und dem Solarpanel 80.

Im vorderen Bereich weist das Gehäuse 10 einen Anschlussschacht 60 mit Anschlüssen 52 auf, die zum Anschliessen von Kontaktfahnen oder Kontaktdrähte, beispielsweise eines Solarpanels (alle nicht näher dargestellt) dienen. Der Anschlussschacht 60 ist durchgängig offen und separat vom Rest des Gehäuses 10 verschliessbar. Dies ermöglicht ein von der Montage unabhängiges Bestücken und Verschliessen der Anschlussdose 1. Dadurch ist das Innenleben der Anschlussdose 1 keinen schädlichen Umwelteinflüssen ausgesetzt. Je nach Ausführungsform ist der Anschlussschacht 60 oben oder seitlich offen. Je nach Anwendungsgebiet ist er in der Mitte der Anschlussdose 1 oder peripher angeordnet.

Die Anschlüsse 52 sind mit einer Leiterplatte 50, z.B. in Form eines Stanzgitters 50 (vgl. Figur 6) oder einer Platine wirkverbunden, welche im Innern des Gehäuses 10 liegt. Der Anschlussschacht 60 ist ebenfalls ein Bestandteil des Montagesockels 30. Die hier im Querschnitt (XY-Ebene) im Wesentlichen O-förmige Aussenwand des Anschlussschachtes 60 wird durch einen umlaufenden Rahmen 62 gebildet, der am unteren Ende in eine umlaufende Montagefläche 69 (Klebfläche) mündet. Die Montagefläche 69 ist so ausgestaltet, dass sie zur Aufnahme von Klebstoff und/oder doppelseitigem Klebeband geeignet ist und kann zur Befestigung des Gehäuses 10 am Solarpanel und/oder der Abdichtung des Anschlussschachtes 60 gegenüber äusseren Einflüssen dienen. Andere Ausgestaltungen eines separa verschliessbaren Anschlussschachtes, z.B. peripher am Gehäuse 10 angeordnet und seitlich offen mit einem im Wesentlichen U-förmigen Querschnitt sind möglich.

Im weiter hinten liegenden Bereich der Anschlussdose 1 sind Kabeleinführungen 11 zu erkennen, welche Anschlusskabel 70 in das Gehäuse 10 einleiten. Falls nur elektronische Bauelemente an ein Solarpanel angeschlossen werden sollen, kann auf eine externe Verkabelung verzichtet werden. Die Kabeleinführungen 11 dienen in der gezeigten Ausführungsform gleichzeitig als Zugentlastung für die Anschlusskabel 70, indem sie diese über eine Klemmvorrichtung fixieren. Die Anschlusskabel 70 sind in der gezeigten Ausführungsform mit Steckverbindern 71 terminiert, so dass ein einfaches Verbinden oder Trennen beispielsweise mit einem externen Verbraucher möglich ist. Die Steckverbinder 71 werden je mittels einer seitlich am Gehäuse 10 angeordneten Halterung 15 fixiert. Die Halterung 15 besteht hier aus einer Steckerklammer 16 und einer Kabelklammer 17 und ist so angeordnet, dass sich die Steckverbinder 71 in einer für eine automatische Funktionsprüfung und den Transport günstigen Position befinden. Eine seitlich am Gehäuse 10 angeordnet Position hat sich im praktischen Einsatz bewährt. Dem Fachmann ist aber klar, dass die Halterung 15 auch an einer anderen Stelle angebracht oder den Steckverbinder 71 in einer anderen Richtung orientiert festgehalten werden kann.

In Figur 2, welche die Anschlussdose 1 von schräg unten zeigt, sind das Gehäuseunterteil 20 mit dem Anschlussschacht 60 und dem Montagesockel 30 und den daran angebrachten Füssen 31 zu erkennen. An der Unterseite des Gehäuseunterteils 20 sind Ausbuchtungen 24 für elektronische Bauelemente, z.B. Dioden, und Kabel ersichtlich.

Am Gehäuseunterteil 20 sind Luftleitbleche 23 angeformt, welche in der gezeigten Ausführungsform in etwa parallel zu einander und den Füssen 31 des Montagesockels 30 verlaufen. Die Luftleitbleche 23 erstrecken sich annähernd über die gesamte Ausdehnung der Anschlussdose 1. Die Luftleitbleche 23 können untereinander oder innerhalb ihrer Länge in der Höhe variieren, so dass auch eine Strömung quer zu ihnen möglich ist. Sie können an einigen Stellen so hoch ausgebildet sein, dass sie zusätzlich zu den Füssen 31 des Montagesockels 30 eine Abstützung des Gehäuses 10 auf einem Solarpanel ermöglichen. Neben einer stabilisierenden und stützenden Wirkung für das Gehäuseunterteil 20, bilden die Luftleitbleche 23 auch Luftkanäle 25, so dass eine Luftströmung bewusst geleitet werden kann. In der dargestellten Ausführungsform leiten die Luftleitbleche 23 die Luftströmung unter dem Gehäuse 10 hindurch und wirken sich dadurch positive auf die Kühlung des Gehäuses 10 aus. Durch eine S-förmige Ausgestaltung wird die Stabilität erhöht. Je nach Anwendungsgebiet können die Luftleitbleche 23 ganz weggelassen oder entsprechend anders ausgebildet sein, z.B. so dass auch eine Luftzirkulation in Querrichtung möglich ist.

Der Montagesockel 30 weist in der gezeigten Ausführungsform seitlich Öffnungen 35 auf, welche einen zusätzliche Luftaustausch unter dem Gehäuseunterteil 20 ermöglichen.

Der Montagesockel 30 ist so gestaltet, dass die gesamte Anschlussdose 1 von der Grundfläche 82 abgehoben wird. Die vom Montagesockel 30 seitlich abstehenden Füsse 31 und der untere Rand des Anschlussschachtes 60 sind mit Klebeflächen 32 ausgebildet, die zur Aufnahme eines Klebstoffes dienen und an denen die Anschlussdose 1 an einer Grundfläche, beispielsweise der Rückseite einer Solarzelle, angeklebt wird. Ergänzend zu den Klebeflächen 32 weisen die Füsse 31 zweite Montageflächen 33 auf, an denen z.B. ein doppelseitiges Klebeband 34 angebracht werden kann. Dieses doppelseitige Klebeband 34 ermöglicht eine sofortige Fixierung der Anschlussdose 1 an der Grundfläche bevor der Klebstoff zwischen der Klebefläche 32 und der Oberfläche der Solarzelle ausgehärtet ist.

Figur 4 zeigt eine Schnittdarstellung entlang der Linie DD gemäss Figur 3. Dabei ist die Anschlussdose 1 montiert auf einer Grundfläche 82, beispielsweise der Rückseite eines schematisch dargestellten Solarpaneels 80, dargestellt (das Solarpanel ist in Figur 3 nicht dargestellt). Ausgehend von der Rückseite des Solarpanels 80 sind Kontaktfahnen bzw. die Kontaktdrähte (nicht näher dargestellt) der Solarzelle 81 in den Anschlussschacht 60 hineingeführt und dort an die Anschlüsse 52 der Platine 50 angeschlossen. In der gezeigten Ausführungsform werden die Kontaktfahnen an den Anschlüssen 52 angelötet, alternative Kontaktierungen, beispielsweise mit Klemmen sind denkbar. Der Anschlussschacht 60 ist mit einem Deckel 63 verschlossen. Der Deckel 63 weist eine zentrale Öffnung 66 zum Ausgiessen des Anschlussschachtes 60 mit einer Vergussmasse auf. Der Deckel 63 ist zudem so ausgestaltet, dass er in den Anschlussschacht 60 hineinragt und so die für das Ausgiessen des Hohlraumes erforderliche Menge an Vergussmasse reduziert. Die Vergussmasse dichtet die Anschlüsse 52 der Platine 50 sowie die Kontaktfahnen bzw. Kontaktdrähte der Solarzelle 81 gegenüber Umwelteinflüssen ab. Das elektrische Anschlusskabel 70 wird als Zugentlastung durch eine Kabelklemmung 11 zwischen Gehäuseunter und Gehäuseoberteil eingeklemmt

Die beiden Gehäuseteile 20, 40 weisen umlaufend an ihrem Rand eine Dichtung 12 auf, welche im dargestellten Fall durch eine Nut-/Federsystem 13 gebildet wird. Alternativ kann die Dichtung 12 jedoch auch durch einen konventionellen in eine Nut, entweder am Gehäuseoberteil 40 oder am Gehäuseunterteil 20, eingelegten Dichtungsring, direkt durch eine in Zweikomponentenspritzguss eingebrachte Dichtmasse oder durch eine Labyrinthdichtung realisiert werden. Die Platine 50 mit ihren auf der Unterseite angebrachten elektrischen/elektronischen Bauelementen 51 liegt flächig auf beiden Gehäusehälften 20, 40 auf, wobei für die elektrischen/elektronischen Bauelemente 51 und die externen Anschlusskabel 70, welche auf der Platine angeordnet und kontaktiert sind, Dioden- und Kabelaussparungen 21, 22 im Gehäuseunterteil 20 vorgesehen sind. Alternativ können diese Aussparungen 21, 22 im Gehäuseoberteil 40 ausgebildet sein und die entsprechenden Komponenten auf der Oberseite der Platine 50 montiert werden. Die Platine 50 oder mindestens die Anschlüsse 52 ragen aus den beiden verschlossenen Gehäuseteilen 20, 40 in den Anschlussschacht 60 hinein.

Die Figur 6 zeigt die Anschlussdose 1 mit entferntem Gehäuseoberteil 40 gemäss Figur 1 in einer perspektivischen Darstellung von schräg vorn und oben. Zu erkennen sind die auf dem Gehäuseunterteil 20 aufgelegte Leiterplatte 50, welche durch Stanzen aus einem massiven Metallblech (Stanzgitter) gefertigt ist. Die Platine 50 ist möglichst grossflächig ausgestaltet, um die in den elektrischen/elektronischen Bauelementen 51 erzeugte Wärme möglichst effizient über das Gehäuse nach aussen abzuleiten. Die Platine 50 ist durch isolierende Trennfugen 54 in Teilbereiche unterteilt, welche mit den Anschlüssen 52 verbunden sind. Die Teilbereiche der Platine 50 werden über die elektrischen/elektronischen Bauelemente 51 untereinander verbunden.

Seitlich am Gehäuseunterteil 20 stehen die Füsse 31 ab, die zusammen mit dem Anschlussschacht 60 den Montagesockel 30 bilden. An je einem Fuss 31 ist eine Halterung 15 für eine Steckverbindung 71 angeordnet, welche im Wesentlichen aus einer Kabelklammer 17 und einer Steckerklammer 16 besteht.

## Patentansprüche

1. Anschlussdose (1) zum Anschliessen von mindestens einem im Inneren eines Gehäuses (10) auf einer Leiterplatte (50) angeordneten elektronischen Bauelement (51) an elektrische Anschlüsse eines Solarpanels (80), wobei das Gehäuse (10) einen Anschfussschacht (60) und einen über eine Rückwand des Gehäuses (10) vorstehenden Montagesockel (30) aufweist, der zur Bildung einer Aussenwand des Anschtussschachtes (60) einen umlaufenden Rahmen (62) mit einer umlaufenden Montagefläche (69) umfasst, wobei der Montagesockel (30) zur Befestigung der Anschlussdose (1) an einer Oberfläche des Solarpanels (80) dient und so ausgestaltet ist, dass die Rückwand des Gehäuses (10) in montiertem Zustand einen Abstand (A) zum Solarpanel (80) aufweist, derart, dass eine konvektive Kühlung des Gehäuses (10) resultiert, **dadurch gekennzeichnet, dass** der Anschlussschacht (60) durchgängig offen ausgestaltet und separat vom Rest des Gehäuses (10) durch einen Deckel (63) verschliessbar ist.

2. Anschlussdose (1) gemäss Patentanspruch 1, **dadurch gekennzeichnet, dass**-der Anschlussschacht (60) peripher am Gehäuse (10) angebracht ist.

3. Anschlussdose (1) gemäss einem der Patentansprüche 1 oder 2, **dadurch gekennzeichnet, dass** der Montagesockel (30) mehrteilig ausgebildet ist

4. Anschlussdose (1) gemäss einem der vorangehenden Patentansprüche, **dadurch gekennzeichnet, dass** der Montagesockel (30) mindestens eine Klebefläche (32, 33, 69) zur Aufnahme eines Klebstoffes und/oder eines doppelseitigen Klebebandes (34) aufweist.

5. Anschlussdose (1) gemäss einem der vorangehenden Patentansprüche, **dadurch gekennzeichnet, dass** die Anschlussdose (1) auf der Gehäuserückseite angeordnete Luftleitbleche (23) aufweist.

6. Anschlussdose (1) gemäss Patentanspruch 5, **dadurch gekennzeichnet, dass** die Luftleitbleche (23) derart ausgestaltet sind, dass sie in montiertem Zustand zum Abstützen des Gehäuses (10) gegenüber einem Solarpanel (80) dienen.

7. Anschlussdose (1) gemäss einem der vorangehenden Patentansprüche, **dadurch gekennzeichnet, dass** das Gehäuse (10) zumindest bereichsweise an der Leiterplatte (50) eng anliegt, derart, dass entstehende Wärme durch das Gehäuse (10) nach aussen transportiert wird.

8. Anschlussdose (1) gemäss Patentanspruch 7, **dadurch gekennzeichnet, dass** die Leiterplatte (50) ein Stanzgitter ist

9. Anschlussdose (1) gemäss einem der vorangehenden Patentansprüche, **dadurch gekennzeichnet, dass** das Gehäuse (10) ein Gehäuseunterteil (20) und ein Gehäuseoberteil (40) aufweist, welche die Leiterplatte (50) und das mindestens eine elektronische Bauelement (51) dicht umgeben.

10. Anschlussdose (1) gemäss einem der vorangehenden Patentansprüche, **dadurch gekennzeichnet, dass** das Gehäuse (10) einteilig durch Umspritzen der Leiterplatte (50) und dem mindestens einen elektronischen Bauelement (51) gebildet ist

11. Anschlussdose (1) gemäss einem der vorangehenden Patentansprüche, **dadurch gekennzeichnet, dass** der Anschlussschacht (60) zur Aufnahme eines Vergussmittels geeignet ist.

## Claims

1. Connecting box (1) for connecting at least one electronic component (51), which is arranged on a printed circuit board (50) in the interior of a housing (10) to electrical connections of a solar panel (80), whereby the housing (10) comprises a connecting slot (60) and a projecting mounting base (30), protruding beyond a rear wall of the housing (10), which comprises a circumferential frame (62) with a circumferential mounting surface (69) to form one outer wall of the connecting slot (60), said mounting base (30) serving to attach the connecting box (1) to a surface of the solar panel (80) and being configured such that the rear wall of the housing (10), when in a fitted state, is positioned at a distance (A) from the solar panel (80) in such a manner that a convectional cooling of the housing (10) results, **characterized in that** the connecting slot (60) has a completely open design and can be closed separately from the remainder of the housing (10) by means of a lid (63).

2. Connecting box (1) according to claim 1, **characterized in that** the connecting slot (60) is fitted peripherally onto the housing (10).

3. Connecting box (1) according to one of claims 1 or 2, **characterized in that** the mounting base (30) is formed from a plurality of parts.

4. Connecting box (1) according to any one of the preceding claims, **characterized in that** the mounting base (30) includes at least one adhesive surface (32,33,69) for holding an adhesive and/or a double-sided adhesive tape (34).

5. Connecting box (1) according to any one of the preceding claims, **characterized in that** the connecting box (1) comprises air guide plates (23) which are arranged on the rear face of the housing.

6. Connecting box (1) according to claim 5, **characterized in that** the air guide plates (23), when fitted, are designed to support the housing (10) with respect to a solar panel (80).

7. Connecting box (1) according to any one of the preceding claims, **characterized in that**, the housing (10) fits, at least partially, snuggly to the printed circuit board (50), such that heat that is generated is transported outwards through the housing (10).

8. Connecting box (1) according to claim 7, **characterized in that** the printed circuit board (50) is a stamped grid.

9. Connecting box (1) according to any one of the preceding claims, **characterized in that** the housing (10) comprises a housing lower part (20) and a housing upper part (40), which closely surround the printed circuit board (50) and the at least one electronic component (51).

10. Connecting box (1) according to any one of the preceding claims, **characterized in that** the housing (10) is formed integrally by overmolding the printed circuit board (50) and the at least one electronic component (51).

11. Connecting box (1) according to any one of the preceding claims, **characterized in that** the connecting slot (60) is suitable for holding an encapsulation medium.

## Revendications

1. Boîte de connexions (1) servant à raccorder au moins un composant électronique (51), disposé sur une carte de circuits imprimés (50) à l'intérieur d'un boîtier (10), à des raccords électriques d'un panneau solaire (80), ledit boîtier (10) comportant un puits de connexion (60) et un socle de montage (30), faisant saillie au-delà d'une paroi arrière du boîtier (10), qui comprend un cadre périphérique (62) présentant une surface de montage périphérique (69) de manière à former une paroi extérieure du puits de connexion (60), le socle de montage (30) servant à fixer la boîte de connexions (1) sur une surface du panneau solaire (80) et étant conçu de telle sorte, qu'à l'état monté la paroi arrière du boîtier (10) présente un écart (A) du panneau solaire (80), de telle sorte qu'on obtient un refroidissement par convection du boîtier (10), **caractérisée en ce que** le puits de connexion (60) est conçu de façon ouverte en continu et peut être fermé séparément du reste du boîtier (10) à l'aide d'un couvercle (63).

2. Boîte de connexions (1) selon la revendication 1, **caractérisée en ce que** le puits de connexion (60) est monté sur la périphérie du boîtier (10).

3. Boîte de connexions (1) selon l'une quelconque des revendications 1 ou 2, **caractérisée en ce que** le socle de montage (30) est conçu en plusieurs parties.

4. Boîte de connexions (1) selon l'une quelconque des revendications précédentes, **caractérisée en ce que** le socle de montage (30) comporte au moins une surface adhésive (32, 33, 69) destinée à recevoir un adhésif et/ou un ruban adhésif à double face (34).

5. Boîte de connexions (1) selon l'une quelconque des revendications précédentes, **caractérisée en ce que** la boîte de connexions (1) comporte des déflecteurs d'air (23) disposés sur la face arrière du boîtier.

6. Boîte de connexions (1) selon la revendication 5, **caractérisée en ce que** les déflecteurs d'air (23) sont conçus de telle manière qu'à l'état monté ils assurent le soutien du boîtier (10) contre un panneau solaire (80).

7. Boîte de connexions (1) selon l'une quelconque des revendications précédentes, **caractérisée en ce que** le boîtier (10), est monté, au moins en partie, serré contre la carte de circuits imprimés (50) de telle sorte que la chaleur générée soit transportée vers l'extérieur à travers le boîtier (10).

8. Boîte de connexions (1) selon la revendication 7, **caractérisée en ce que** la carte de circuits imprimés (50) soit une grille estampée.

9. Boîte de connexions (1) selon l'une quelconque des revendications précédentes, **caractérisée en ce que** le boîtier (10) comporte une partie inférieure de boîtier (20) et une partie supérieure de boîtier (40), qui entourent la carte de circuits imprimés (50) et au moins l'un des composants électroniques (51) de manière étanche.

10. Boîte de connexions (1) selon l'une quelconque des revendications précédentes, **caractérisée en ce que** le boîtier (10) est formé d'une seule pièce par enrobage de la carte de circuits imprimés (50) et au moins l'un des composants électroniques (51).

11. Boîte de connexions (1) selon l'une quelconque des revendications précédentes, **caractérisée en ce que** le puits de connexion (60) est apte à recevoir un agent de coulée.
